# EUROPÄISCHE PATENTANMELDUNG

(11) **EP 2 581 687 A1**
(43) Veröffentlichungstag der Anmeldung: **17.04.2013**
(21) Anmeldenummer: 11184663.0
(22) Anmeldetag: 11.10.2011
(51) Int. Cl.: F24J 2/46

(54) **Vorrichtung und Fahrzeug zur Bearbeitung ebener Oberflächen**

(71) Anmelder: Robonaut GmbH, 8006 Zürich (CH)
(72) Erfinder: Michel, Thomas, 8006 Zürich (CH); Vestli, Sjur Jonas, 8955 Oetwil an der Limmat (CH)
(74) Vertreter: Hepp Wenger Ryffel AG

(57) **Zusammenfassung**

Die Vorrichtung (1) umfasst eine Halterung (2) mit Mitteln (3) zur Befestigung der Halterung (2) an ein Fahrzeug (4) sowie einen ersten Haltearm (5), der an einem Ende schwenkbar mit der Halterung (2) verbunden ist. Ferner weist die Vorrichtung (1) ein Bearbeitungselement (6) auf, welcher Mittel zur Bearbeitung einer ebenen Oberfläche aufweist und an einem Ende schwenk- und bevorzugt lösbar mit dem ersten Haltearm (5) verbunden ist. Der erste Haltearm (5) ist mittels eines ersten Drehgelenks (7) relativ zur Halterung (2) und des Bearbeitungselements (6) mittels eines zweiten Drehgelenks (8) relativ zum ersten Haltearm (5) schwenkbar. Durch die Verschwenkung des Bearbeitungselements (6) relativ zum ersten Haltearm (5) mittels eines ersten Antriebsmittels und/oder durch Verschwenkung des ersten Haltearms (5) relativ zur Halterung (2) mittels eines zweiten Antriebsmittels kann ein vorbestimmbarer Abstand (D) des Bearbeitungselements (6) zur ebenen Oberfläche und/oder eine vorbestimmbare Lage des Bearbeitungselements (6) zur ebenen Oberfläche eingestellt werden.

## Beschreibung

Die vorliegende Erfindung betrifft eine Vorrichtung sowie ein Fahrzeug zur Bearbeitung ebener Oberflächen, insbesondere Oberflächen von Solarpaneelen.

Grossflächige Solarpaneele, wie sie beispielsweise in Solarkraftwerken eingesetzt werden, sind der Witterung ausgesetzt und verschmutzen daher relativ rasch. Insbesondere in den sonnenreichen Gebieten werden Solarpaneele aufgrund des oft vorherrschenden trockenen Klimas mit durch Wind aufgewirbeltem mineralischem Staub verschmutzt. Derartige Schmutzablagerungen beeinträchtigen jedoch die Leistung der Solarpaneele, und es kommt daher zu Einbussen in der Stromproduktion. Eine effiziente Reinigung von Solarpaneelen ist daher wichtig, um die maximale Leistung einer Solaranlage beziehungsweise eines Solarkraftwerks zu erhalten.

Bei kleineren Anlagen kann die manuelle Reinigung zwar noch einigermassen effizient durchgeführt werden. Bei Solarkraftwerken mit einigen Tausend Quadratmetern an Paneelfläche ist eine manuelle Reinigung hingegen wenig sinnvoll.

Im Stand der Technik ist eine Vielzahl an Reinigungsanlagen bekannt, um Solarpaneele zu reinigen. Eine erste Gruppe von Reinigungsanlagen ist direkt auf den einzelnen Solarpaneelreihen angebracht, wobei ein Reinigungsarm oder ein Reinigungsschlitten auf an den Rändern der Solarpaneelreihen angebrachten Schienen oder Führungselementen entlangfährt. Derartige Anlagen werden beispielsweise in der EP 2 048 455, WO 2004/091816, DE 20 2010 010 541, DE 20 2009 012 816 oder der DE 20 2009 006 754 beschrieben.

Eine zweite Gruppe von Reinigungsanlagen ist an einem Fahrzeug wie zum Beispiel einem Lastwagen befestigt. Die WO 2011/029416 beschreibt beispielsweise ein Fahrzeug mit einem Reinigungsarm, welcher durch daran angebrachte Stützräder auf der Oberfläche von Solarpaneelen entlangfährt, wobei zwischen den Stützrädern eine Vielzahl von Reinigungsdüsen angebracht ist. Zusätzlich verfügt der Reinigungsarm über eine Vielzahl von Bürsten, welche über eine doppelte Führungsstange in oszillierende Bewegungen versetzt werden können. Über mindestens ein Gelenk kann der Reinigungsarm relativ zum Fahrzeug geschwenkt werden, um beispielsweise einen Anstellwinkel einer Solarpaneeloberfläche ausgleichen zu können.

Ein wesentlicher Nachteil dieser Reinigungsanlage ist jedoch, dass ein Grossteil des Gewichts des Reinigungsarms auf den Solarpaneelen aufliegt. Ausserdem wird der Reinigungsarm bei allfälligen Kippbewegungen des Fahrzeugs, welche von Unebenheiten des Bodens oder der Fahrbahn hervorgerufen werden, mit bewegt, was die Reinigungseffizienz punktuell vermindern und ausserdem zu Überbelastungen der Solarpaneeloberfläche durch eine zu hohe Krafteinwirkung des Reinigungsarmes führen kann.

ES 1 074 781 offenbart ein Reinigungsfahrzeug für Solarpaneele, bei dem ein Reinigungsarm über einen Roboterarm, der über mehrere zueinander gelenkig und teleskopisch verschiebbar angeordnete Glieder verfügt, offenbart. Um einen konstanten Abstand und/oder eine konstante Lage zur Oberfläche der Solarpaneele einzuhalten, sind Sensoren vorgesehen, welche den Abstand zwischen dem Reinigungsarm und der Oberfläche der Solarpaneele messen, wobei Abweichungen von einem Sollabstand oder einer Solllage durch entsprechende Stellmittel ausgeglichen werden.

Nachteilig an diesem Reinigungsfahrzeug ist, dass ein mehrgliedriger Roboterarm relativ hohe Herstellungskosten verursacht und im Unterhalt teuer ist. Ausserdem ist aufgrund der Ausgestaltung mit mehreren Gelenken und teleskopisch verschiebbaren Gliedern eine aufwändige Steuerungssoftware nötig, um den Reinigungsarm stets in einem definierten Abstand und/oder einer definierten Lage zur Oberfläche von Solarpaneelen zu halten. Da das beschriebene System über hohe Trägheiten verfügt, weist das Reinigungsfahrzeug schlechte Reaktionszeiten beim Verstellen des Roboterarms auf. Die wirkt sich nachteilig aus, wenn Schwenkbewegungen des Fahrzeugs ausgeglichen werden sollen.

Eine Aufgabe der vorliegenden Erfindung ist es daher, eine Vorrichtung zur Bearbeitung von ebenen Oberflächen, insbesondere Oberflächen von Solarpaneelen, zu schaffen, welche die Nachteile des Bekannten vermeidet und welche insbesondere eine möglichst einfache Ausgestaltung eines Bearbeitungselements aufweist, der in einem bestimmten Abstand und/oder in einer bestimmten Lage zur Oberfläche gehalten werden kann. Diese Aufgabe wird mit einer Vorrichtung gemäss Anspruch 1 gelöst.

Die erfindungsgemässe Vorrichtung zur Bearbeitung ebener Oberflächen, insbesondere Oberflächen von Solarpaneelen, umfasst eine Halterung mit Mitteln zur Befestigung der Halterung an ein Fahrzeug sowie einen ersten Haltearm, der an einem Ende schwenkbar mit der Halterung verbunden ist. Ferner weist die Vorrichtung ein Bearbeitungselement auf, welches Mittel zur Bearbeitung einer ebenen Oberfläche beinhaltet und an einem Ende schwenk-und bevorzugt lösbar mit dem ersten Haltearm verbunden ist. Der erste Haltearm ist mittels eines ersten Drehgelenks relativ zur Halterung und das Bearbeitungselement ist mittels eines zweiten Drehgelenks relativ zum ersten Haltearm schwenkbar. Durch die Verschwenkung des Bearbeitungselements relativ zum ersten Haltearm mittels eines ersten Antriebsmittels und/oder durch Verschwenkung des ersten Haltearms relativ zur Halterung mittels eines zweiten Antriebsmittels kann ein vorbestimmbarer Abstand und/oder eine vorbestimmbare Lage des Bearbeitungselements zur ebenen Oberfläche eingestellt werden.

Die Vorrichtung kann zur Bearbeitung von allerlei ebenen Flächen wie beispielsweise Glasflächen, Betonflächen, etc. eingesetzt werden. Bevorzugt wird die Vorrichtung jedoch zur Bearbeitung von Solarpaneelen eingesetzt. Insbesondere bevorzugt handelt es sich dabei um Solarkraftwerke mit einer grossen Anzahl an in Reihen oder Flächen angeordneten Solarpaneelen.

Die Mittel zur Befestigung der Halterung an ein Fahrzeug können je nach Grösse und Ausgestaltung der Vorrichtung und/oder des Fahrzeugs variieren. Die Befestigung der Halterung an das Fahrzeug kann dabei permanent ausgestaltet sein oder die Mittel können derart ausgestaltet sein, dass sich die Halterung vom Fahrzeug lösen lässt. Beispielsweise können die Mittel aus Schrauben, Bolzen oder dergleichen bestehen. Beim Fahrzeug kann es sich insbesondere um einen Anhänger, einen Lastwagen, einen Pritschenwagen oder dergleichen handeln. Besonders bevorzugt handelt es sich beim Fahrzeug um ein Geräteträgerfahrzeug, insbesondere ein Geräteträgerfahrzeug, welches zumindest teilweise autonom, also ohne Fahrzeugführer fahren kann.

Die Energieversorgung des Fahrzeugs erfolgt vorzugsweise über einen Verbrennungsmotor, wie einem Diesel- oder Ottomotor, wobei der Verbrennungsmotor besonders bevorzugt sowohl einen Stromgenerator wie auch eine Hydraulik- und/oder Pneumatikpumpe antreibt. Alternativ kann das Fahrzeug auch über eine externe Stromquelle versorgt werden. Dabei weist das Fahrzeug vorzugsweise eine Batterie oder einen Akkumulator auf, mit welchem kurzzeitige Unterbrüche der externen Energieversorgung überbrückt werden können. Andere Energiequellen, wie beispielsweise die Verbrennung von komprimiertem Erdgas (CNG) oder Ethanol sowie die Umsetzung eines geeigneten Brennstoffs in einer Brennstoffzelle können alternativ auch zur Energieversorgung des Fahrzeugs genutzt werden.

Der Fahrantrieb des Fahrzeugs erfolgt bevorzugt über einen Hydraulikmotor oder über einen Elektromotor. Dies erlaubt eine sehr genaue Kontrolle der Position des Fahrzeugs über den Antrieb. Es ermöglicht die präzise Korrektur von Positionsabweichungen und eine Positionsregelung unter Last am Fahrantrieb.

Als "ebene Oberfläche" im Sinne der Anmeldung wird eine Oberfläche verstanden, die zumindest im Wesentlichen eben ausgestaltet ist. Die Oberfläche kann dabei einstückig ausgebildet sein oder aber auch aus einer Vielzahl an aneinander angeordnete Flächen bestehen, beispielsweise aus einer Reihe von Glasscheiben oder von Solarpaneelen. Je nach Art der Oberfläche kann diese kleinere Unebenheiten aufweisen, die beispielsweise von auf oder in der Oberfläche vorhandenen Befestigungselementen oder dergleichen hervorgerufen werden. Ferner kann die Oberfläche auch eine gewisse Rauheit oder eine bestimmte Krümmung aufweisen. Zur Bearbeitung einer gekrümmten Oberfläche weist das Bearbeitungselement bevorzugt dieselbe Krümmung auf wie die Oberfläche. Für die Bearbeitung einer Solarpaneeloberfläche ist das Bearbeitungselement hingegen gerade ausgebildet und von länglicher Form, insbesondere eine quadratische oder zylindrische Form.

Die Mittel zur Bearbeitung einer ebenen Oberfläche das Bearbeitungselements können je nach der bearbeiteten Oberfläche und dem beabsichtigten Effekt unterschiedlich sein. Beispielsweise kann es sich bei den Mitteln zur Bearbeitung um Spritzdüsen zum Auftragen einer flüssigen Beschichtung oder zum Versprühen von Fluiden, insbesondere Chemikalien handeln. Alternativ können die Mittel auch aus Sensoren bestehen, welche zum Vermessen und/oder zum Abtasten der Oberfläche eingesetzt werden, beispielsweise zur Überprüfung der Oberfläche auf Risse oder Beschädigungen. Ferner kann es sich auch um Schleif- oder Polierbürsten handeln oder um Schneidwerkzeuge, beispielsweise zum Mähen. Die Mittel zur Bearbeitung können aber auch über mindestens eine Saugvorrichtung verfügen, beispielsweise zum Aufsaugen von Staub, Dreckpartikeln oder ähnliches. Besonders bevorzugt handelt es sich bei den Mitteln jedoch um Reinigungsbürsten und/oder Spritzdüsen zum Auftragen einer Reinigungsflüssigkeit, wie beispielsweise Wasser.

Das Bearbeitungselement ist bevorzugt lösbar mit dem ersten Haltearm verbunden. Dies ermöglicht das Abnehmen und/oder Auswechseln des Bearbeitungselements, beispielsweise falls die Vorrichtung für eine andere Bearbeitung der Oberfläche eingesetzt werde soll oder die am Bearbeitungselement angebrachten Bearbeitungselemente ausgetauscht werden müssen. Schwenk- und bevorzugt lösbare Verbindungen sind im Stand der Technik bekannt.

Das Bearbeitungselement weist vorzugsweise eine längliche Form auf, wobei dessen Länge bevorzugt so gewählt wird, dass das Bearbeitungselement die ebene Fläche wenigstens in einer ihrer Ausdehnrichtung vollständig überspannt. Vorzugsweise entspricht die Länge des Bearbeitungselements der Kantenlänge in der Ausdehnrichtung der Fläche, welche in einem bestimmten Winkel bevorzugt im rechten Winkel zu einer Kante steht, entlang der das Fahrzeug entlangfahren soll. Beispielsweise kann das Bearbeitungselement eine Länge aufweisen, die der kürzesten Kantenlänge einer Solarpaneelreihe entspricht.

Bevorzugt sind sowohl der erste Haltearm und die Halterung als auch das Bearbeitungselement und der erste Haltearm über jeweils ein Drehgelenk gegeneinander schwenkbar verbunden. Eine derartige Ausgestaltung ermöglicht ein möglichst einfaches Verstellen des Bearbeitungselements gegenüber der Halterung, da lediglich zwei Drehgelenke mittels nur zwei Antriebsmitteln verstellt werden müssen. Auch im Hinblick auf die Herstellung und den Unterhalt sind Drehgelenke kostenoptimaler und besser geeignet für die Abdichtung gegen Staub und Wetter.

Das erste sowie das zweite Antriebsmittel sind bevorzugt separat ausgebildet, zum Beispiel sind das erste und das zweite Antriebsmittel als Elektro-Servomotoren ausgebildet. Ferner können die Antriebsmittel auch als Seilzüge, Riemenzüge, Hydraulik- oder Pneumatikzylinder bestehen, welche ein Verschwenken des Bearbeitungselements relativ zum ersten Haltearm beziehungsweise des ersten Haltearm relativ zur Halterung ermöglichen. Die Antriebsmittel sind vorzugsweise über Seile, Riemen und/oder Stangen mit den Haltearmen und/oder dem Bearbeitungselement verbunden. Dies ermöglicht ein vorteilhaftes Anordnen der Antriebsmittel an der Halterung, da die Antriebsmittel nicht unmittelbar beim Drehgelenk angebracht werden müssen.

Bevorzugterweise sind die Achsen des ersten Drehgelenks und des zweiten Drehgelenks derart angeordnet, dass das Bearbeitungselement und/oder der erste Haltearm bei bestimmungsgemässem Gebrauch der Vorrichtung nur in einer definierten Ebene verschwenkbar sind, insbesondere in einer Ebene, welche vertikal zur Bewegungsrichtung des Fahrzeugs liegt.

Vorzugsweise ist die Halterung derart an einem Fahrzeug befestigbar, dass die Schwenkebene des Bearbeitungselements und/oder des ersten Haltearms in einer Ebene verschwenkbar sind, welche vertikal zur Bewegungsrichtung des Fahrzeugs liegt.

Unter "bestimmungsgemässer Verwendung" der Vorrichtung wird verstanden, dass die Vorrichtung durch das Fahrzeug entlang einer Seite oder Kante einer zu bearbeitenden ebenen Oberfläche bewegt wird, wobei das Bearbeitungselement einen bestimmten Abstand und/oder eine bestimmte Lage zur ebenen Oberfläche aufweist.

Besonders bevorzugt liegt die Ebene, in welcher die beiden Drehgelenke verschwenkbar sind, rechtwinklig zur Bewegungsrichtung des Fahrzeugs. Dadurch lässt sich das Bearbeitungselement lateral vom Fahrzeug in der vertikalen Ebene einstellen.

Durch die Ausgestaltung mit den zwei Drehgelenken können sowohl der Abstand des Bearbeitungselements zum Boden, auf dem das Fahrzeug fährt, sowie der Winkel zwischen dem Bearbeitungselement und dem Fahrzeug eingestellt werden. Diese ermöglicht das Einstellen eines bestimmten Abstandes und/oder einer bestimmten Lage zur ebenen Oberfläche, unabhängig davon, in welcher Höhe und in welchem Winkel die ebene Fläche relativ zum Boden angeordnet ist.

Die maximale Höhe sowie den maximalen Winkel der Fläche, zu der das Bearbeitungselement in einem bestimmten Abstand und/oder einer bestimmten Lage gehalten werden soll, ist durch die Länge des ersten Haltearms und durch die Ausgestaltung der Drehgelenke begrenzt. Je nach dem beabsichtigten Einsatz der Vorrichtung lässt sich die Vorrichtung daher an verschiedene Maximalhöhen und/oder Maximalwinkel anpassen, indem die Länge des ersten Haltearms und/oder die maximalen Schwenkwinkel der beiden Drehgelenke variiert werden. Alternativ könnte die Halterung über eine Hebevorrichtung verfügen, welche es ermöglicht, den ersten Haltearm relativ zur Halterung und dem Fahrzeug in der Höhe einzustellen, beispielsweise mittels einer Hebebühne oder dergleichen.

Durch die beiden Drehgelenke lässt sich das Bearbeitungselement in einem bestimmten Abstand und/oder einer bestimmten Lage zur ebenen Oberfläche nachführen, wobei allfällige Kippbewegungen des Fahrzeugs, welche beispielsweise durch Unebenheiten des Bodens oder der Fahrbahn hervorgerufen werden, durch koordiniertes einstellen der beiden Drehgelenke ausgeglichen werden können, so dass das Bearbeitungselement stets den gleichen Abstand und/oder die gleiche Lage zur ebenen Oberfläche einhält.

Die Ausgestaltung als Drehgelenk ermöglicht eine einfache Ausgestaltung des ersten und/oder zweiten Antriebsmittels, da diese in diesem Fall bevorzugt als Elektro- oder Hydraulikservomotoren ausgestaltet sein können. Die Motoren können dabei direkt oder alternativ über ein Getriebe auf die Drehachse einwirken. Insbesondere bevorzugt werden Torquemotoren als direkte Antriebsmittel eingesetzt.

Zwischen dem ersten Haltearm und der Halterung ist bevorzugt ein Kraftspeicher wirksam, welcher entgegen der Wirkrichtung der Schwerkraft auf den ersten Haltearm eine Kraft ausübt, die etwa der Gewichtskraft des Bearbeitungselements und der Gewichtskraft des ersten Haltearms entspricht.

Der Kraftspeicher kann als Feder, wie beispielsweise eine Schraubenfeder oder eine Blattfeder, eine Luftfeder oder ein Pneumatikzylinder ausgestaltet sein. Alternativ kann der Kraftspeicher auch als Gegengewicht ausgestaltet sein, welches mit dem ersten Haltearm in Wirkverbindung steht. Da die ausgeübte Druckkraft der Gewichtskraft des Bearbeitungselements und des ersten Haltearms entspricht, wird das Gewicht des Bearbeitungselements und des ersten Haltearms durch den Kraftspeicher weitgehend kompensiert, so dass zur Bewegung des ersten Haltearms keine statischen sondern nur noch dynamische Krafteinwirkungen nötig sind. Dies reduziert den zur Bewegung des ersten Haltearms nötige Energie und führt auch dazu, dass wegen des Fehlens des statischen Kraftanteils die Dynamik des System insgesamt erhöht werden kann, da Bewegungen mit einer höheren Beschleunigung möglich sind, als wenn kein Kraftspeicher vorhanden wäre.

Bevorzugt weist die Vorrichtung mindestens einen Sensor zur Messung des Abstandes und/oder der Lage des Bearbeitungselements zur ebenen Oberfläche auf. Dadurch lässt sich zu jeder Zeit während der Bearbeitung der Oberfläche der Abstand bestimmen. Der mindestens eine Sensor ist dabei bevorzugt am Bearbeitungselement angeordnet. Insbesondere bevorzugt weist die Vorrichtung mehrere Sensoren auf, die am Bearbeitungselement angeordnet sind.

Dadurch lässt sich der Abstand und/oder die Lage des Bearbeitungselements zur ebenen Oberfläche über möglichst die gesamte Länge und/oder Breite des Bearbeitungselements bestimmen. Dies ermöglicht eine exakte Einstellung und/oder Nachführung des Abstandes und/oder der Lage über die gesamte Länge des Bearbeitungselements. Als Sensoren können alle üblicherweise zur Bestimmung von Abständen eingesetzte Sensoren eingesetzt werden, wie beispielsweise Ultraschallsensoren, optische Sensoren, Lasersensoren, Radarsensoren, etc. Besonders bevorzugt werden Ultraschallsensoren eingesetzt. Zur Bestimmung der Lage des Bearbeitungselements zur ebenen Oberfläche können mehrere Abstandssensoren verwendet werden. Alternativ kann auch ein Scanner, wie ein Laserscanner oder eine 3D Kamera eingesetzt werden, um die Lage des Bearbeitungselements zur ebenen Oberfläche zu bestimmen. Insbesondere bevorzugt weist die Vorrichtung eine Mehrzahl an Sensoren auf, um eine möglichst redundante Bestimmung des Abstandes und/oder der Lage des Bearbeitungselements zur ebenen Oberfläche zu ermöglichen.

Bevorzugt verfügt die Vorrichtung über mindestens einen Inertialsensor, mit dem die auf das Bearbeitungselement und/oder der Halterung einwirkenden Beschleunigungskräfte insbesondere in allen 6 Freiheitsgraden gemessen werden können.

Über die Messung der auf das Bearbeitungselement und/oder der Halterung einwirkenden Beschleunigungswerte kann bestimmt werden, wie und insbesondere wie schnell sich der Abstand des Bearbeitungselements zur ebenen Oberfläche verändern wird. Dadurch kann sichergestellt werden, dass eine adäquate Nachführung des Bearbeitungselements erfolgt. Besonders bevorzugt verfügen das Bearbeitungselement sowie die Halterung je über mindestens einen Inertialsensor. Dies vereinfacht die Bestimmung der zum Nachführen des Bearbeitungselements nötigen koordinierten Schwenkbewegungen des ersten und/oder zweiten Drehgelenks, da Informationen zu den sowohl auf das Bearbeitungselement als auch auf die Halterung einwirkenden Beschleunigungen zur Verfügung stehen.

Die Vorrichtung verfügt bevorzugt über Steuerungsmittel, welche aufgrund des gemessenen Abstandes und/oder der gemessenen Beschleunigungskräfte durch koordinierte Ansteuerung des ersten Antriebsmittels und/oder des zweiten Antriebsmittels den Abstand des Bearbeitungselements zur ebenen Oberfläche auf einen vorbestimmten oder vorbestimmbaren Wert einstellt oder nachführt.

Die Steuerungsmittel umfassen bevorzugterweise einen Rechner, der gestützt auf die Sensormessdaten die nötigen koordinierte Verschwenkungen des ersten und/oder zweiten Drehgelenks berechnet, um einen bestimmten Abstand und/oder eine bestimmte Lage des Bearbeitungselements zur ebenen Oberfläche einzustellen und/oder das Bearbeitungselement nachzuführen. Dieses koordinierte Verschwenken erfolgt vorzugsweise mehr als einmal pro Sekunde, besonders bevorzugt 100-mal pro Sekunde. Der einzuhaltende Abstand und/oder die einzuhaltende Lage ist bevorzugterweise vorbestimmt. Dieser vorbestimmte Wert ist dabei bevorzugt derart gewählt, dass die am Bearbeitungselement angebrachten Bearbeitungsmittel ihre maximale Wirkung auf der Oberfläche erreichen. Insbesondere ist dieser Wert über eine Prozesssoftware, welche auf dem Rechner eingesetzt werden kann, vorbestimmt. Vorzugsweise wird dieser Wert in Abhängigkeit von Messwerten, wie beispielsweise der Leistungsaufnahme der Bearbeitungsmittel, verändert, bis der Messwert einen Sollwert erreicht. Dadurch kann beispielsweise gewährleistet werden, dass die ebene Oberfläche gleichmässig bearbeitet wird.

Bevorzugt weist das erste Antriebsmittel einen zweiten Haltearm auf, der über ein drittes Drehgelenk schwenkbar mit der Halterung verbunden ist und direkt oder indirekt über ein viertes Drehgelenk schwenk- und bevorzugt lösbar mit dem Bearbeitungselement verbunden ist.

Das vierte Drehgelenk liegt dabei auf dem Bearbeitungselement und ist vorzugsweise vom ersten Drehgelenk beabstandet. Besonders bevorzugt liegt das vierte Drehgelenk auf einer Position, welche der Hälfte der Länge des Bearbeitungselementes entspricht. Alternativ liegt das vierte Drehgelenk in einer Position zwischen der Hälfte der Länge des Bearbeitungselementes und dem Ende des Bearbeitungselementes, der dem mit dem ersten Haltearm verbundnen Ende gegenüberliegt. Dies ermöglicht das Ausnutzen des Hebeleffekts für das Einstellen des Winkels des Bearbeitungselements relativ zur Halterung, was den dazu nötigen Kraftaufwand reduziert.

Bei einer direkten Verbindung zwischen Bearbeitungselement und zweitem Haltearm greift der zweite Haltearm über das vierte Drehgelenk auf das Bearbeitungselement ein. Bei einer indirekten Verbindung ist mindestens ein zusätzliches Element zwischen dem zweiten Haltearm und dem Bearbeitungselement angeordnet, wie beispielsweise ein Seil, ein Seilsystem, ein Zahnriemen, eine Stange, ein Riemen aus einer Kunstfaser, wie beispielsweise aus aromatischen Polyamid (Aramid) oder aus hochkristallinem, hochverstrecktem ultrahochmolekularem Polyethylen (z.B. Dyneema von Royal DSM, Niederlanden), oder dergleichen.

Die lösbare Verbindung ermöglicht das Auswechseln beziehungsweise das Abnehmen des Bearbeitungselements von der Vorrichtung.

Bevorzugt sind die Achsen des dritten Drehgelenks und des ersten Drehgelenks co-axial angeordnet. Dadurch wird erreicht, dass zum Verstellen des Abstandes des Bearbeitungselements oder des Anstellwinkels nur um ein einziges Gelenk verschwenkt werden muss, da sich die Drehachsen der Drehgelenke nicht gegenseitig beeinflussen. Das heisst, dass durch Verschwenken des ersten Drehgelenks der Abstand des Bearbeitungselements zur ebenen Oberfläche verändert werden kann, ohne dass sich dabei der Anstellwinkel des Bearbeitungselements verändert. Dementsprechend kann durch Verschwenken am zweiten Drehgelenk der Anstellwinkel des Bearbeitungselements verändert werden, ohne dass sich der Abstand des Bearbeitungselements zur ebenen Oberfläche verändert. Dadurch können die beiden separaten Verstellbewegungen des Bearbeitungselements voneinander kinematisch entkoppelt werden. Vorzugsweise ist der zweite Halterarm indirekt über mindestens eine Strebe schwenk- und bevorzugt lösbar mit dem Bearbeitungselement verbunden. Durch die Verwendung eines zweiten Haltearms ist es möglich, beide Antriebsmittel auf der Halterung anzuordnen, so dass beim Verschwenken um die erste Drehachse nicht zusätzlich das Gewicht des zweiten Antriebsmittels mitverschwenkt werden muss. Es wird zudem möglich, beide Antriebsmittel auf der dem Bearbeitungselement entgegengesetzten Seite der Halterung anzuordnen, so dass das Gesamtgewicht der Vorrichtung besser über die Breite der Halterung verteilt werden kann.

Bevorzugt ist zwischen dem zweiten Haltearm und der Halterung ein Kraftspeicher wirksam, welcher in einer Richtung, welche rechtwinklig zur Wirkrichtung der Schwerkraft steht, auf den zweiten Haltearm eine Kraft ausübt, die der Gewichtskraft des Bearbeitungselements in etwa entspricht.

Durch diesen Kraftspeicher können die Gewichtskräfte des Bearbeitungselements sowie des zweiten Haltearms, die auf den zweiten Haltearm einwirken, grösstenteils kompensiert werden. Da die ausgeübte Druckkraft der Gewichtskraft des Bearbeitungselements und des zweiten Haltearms entspricht, wird das Gewicht des Bearbeitungselements und des zweiten Haltearms durch den Kraftspeicher weitgehend kompensiert, so dass zur Bewegung des zweiten Haltearms keine statischen sondern nur noch dynamische Krafteinwirkungen nötig sind. Dies reduziert den zur Bewegung des zweiten Haltearms nötige Energie und führt auch dazu, dass wegen des Fehlens des statischen Kraftanteils die Dynamik des System insgesamt erhöht werden kann, da Bewegungen mit einer höheren Beschleunigung möglich sind, als wenn kein Kraftspeicher vorhanden wäre.

Der zweite Halterarm ist bevorzugt indirekt über zwei Streben schwenk- und bevorzugt lösbar mit dem Bearbeitungselement verbunden. Die Vorrichtung weist dabei zusätzlich einen Zwischenarm auf, welcher über das erste Drehgelenk am ersten Haltearm schwenkbar angeordnet ist, wobei eine erste Strebe zwischen dem zweiten Haltearm und dem Zwischenarm angebracht ist und der erste Haltearm, die erste Strebe, der zweite Haltearm sowie der Zwischenarm derart ausgestaltet sind, dass diese ein Parallelogramm bilden, und wobei eine zweite Strebe zwischen dem Bearbeitungselement und dem Zwischenarm schwenk- und bevorzugt lösbar angeordnet ist.

Bevorzugt sind das Bearbeitungselement, die zweite Strebe sowie der Zwischenarm derart ausgestaltet, dass diese ein starres Fachwerk bilden. Das heisst, dass diese drei Elemente ihre relative Position zueinander bei Schwenkbewegungen nicht verändern.

Die erste Strebe besteht vorzugsweise aus mindestens einem flexiblen Seil. Alternativ kann die erste Strebe allerdings auch aus einem Seilsystem oder aus Riemen bestehen.

Vorzugsweise weist die Halterung einen zusätzlichen Haltemast auf, der derart ausgestaltet ist, dass das Bearbeitungselement in einer im Wesentlichen vertikalen Position relativ zur Bewegungsrichtung des Fahrzeugs daran befestigt werden kann, insbesondere in einem automatisierten Arbeitsschritt.

Dadurch wird es möglich, dass das Bearbeitungselement in eine im Wesentlichen vertikalen Fahr- oder Ruheposition gebracht und gehalten werden kann. Insbesondere wenn die erste Strebe als flexibles Seil oder als Kette ausgestaltet ist, kann nach dem Einhängen des Bearbeitungselements am Haltemast der zweite Haltearm in Richtung Bearbeitungselement verschwenkt werden, wobei das Seil oder die Kette entspannt wird. Durch dieses "Einfahren" des zweiten Arms und des Bearbeitungselements weist die Vorrichtung eine reduzierte Breite auf, was beim Bewegen der Vorrichtung durch das Fahrzeug vereinfacht.

Durch das Befestigen des Bearbeitungselements am Haltemast kann verhindert werden, dass der erste beziehungsweise der zweite Haltearm von Kräften, welche durch das Bewegen der Vorrichtung hervorgerufen werden, zumindest teilweise entlastet werden.

Bevorzugt ist das Bearbeitungselement derart ausgestaltet, dass die Vorrichtung zur Trockenreinigung, zur Nassreinigung, zum Auftragen eines Fluids und/oder zum Messen einer Eigenschaft der ebenen Oberfläche geeignet ist.

Für die Trockenreinigung ist der Arbeitsarm vorzugsweise mit beweglichen Bürsten, insbesondere mit rotierenden Bürsten oder einer Bürstenwalze, und/oder mit Druckluftdüsen ausgestattet. Ferner kann auch eine Absaugevorrichtung am Bearbeitungselement angeordnet sein, welche aufgewirbelten Staub und dergleichen Absaugen kann.

Für die Nassreinigung ist der Arbeitsarm vorzugsweise mit Nieder- und/oder Hochdruckdüsen ausgestattet, wahlweise in Kombination mit beweglichen Bürsten oder dergleichen. Dabei kann Wasser, deionisiertes Wasser und/oder eine Waschlösung auf die ebene Oberfläche aufgesprüht werden.

Zum Beschichten verfügt der Arbeitsarm bevorzugt über entsprechende Applikationsmittel, wie beispielsweise Düsen oder Walzen, um ein Fluid oder Nanopartikel auf die Oberfläche zu applizieren.

Zum Messen ist der Arbeitsarm vorzugsweise mit entsprechenden Messsensoren oder Kameras ausgestattet. Beispielsweise kann mit einem entsprechend ausgerüsteten Bearbeitungselement die ebene Oberfläche auf etwaige Risse oder sonstige Beschädigungen inspiziert werden.

Die Versorgung des Bearbeitungselements mit Energie, beispielsweise zum Antrieb von Bürsten oder Sensoren, den benötigten Fluiden, wie einer Waschlösung oder einer Beschichtungslösung, sowie Druckluft erfolgt vorzugsweise von aussen, insbesondere durch das Fahrzeug. Dabei kann das Bearbeitungselement mittels entsprechender Versorgungsleitungen mit dem Fahrzeug verbunden werden.

Eine weitere Aufgabe der vorliegenden Erfindung ist es, ein Fahrzeug zur Bearbeitung von im Wesentlichen ebenen Oberflächen, insbesondere Oberflächen von Solarpaneelen, zu schaffen. Diese Aufgabe wird mit einem Fahrzeug gemäss Anspruch 15 gelöst.

Das erfindungsgemässe Fahrzeug weist mindestens eine Vorrichtung auf, welche eine Halterung mit Mitteln zur Befestigung der Halterung an das Fahrzeug sowie einen ersten Haltearm, der an einem Ende schwenkbar mit der Halterung verbunden ist, umfasst. Ferner weist die Vorrichtung ein Bearbeitungselement auf, welcher Mittel zur Bearbeitung einer ebenen Oberfläche beinhaltet und an einem Ende schwenk- und bevorzugt lösbar mit dem ersten Haltearm verbunden ist. Der erste Haltearm ist mittels eines ersten Drehgelenks relativ zur Halterung und das Bearbeitungselement ist mittels eines zweiten Drehgelenks relativ zum ersten Haltearm schwenkbar. Durch die Verschwenkung des Bearbeitungselements relativ zum ersten Haltearm mittels eines ersten Antriebsmittels und/oder durch Verschwenkung des ersten Haltearms relativ zur Halterung mittels eines zweiten Antriebsmittels kann ein vorbestimmbarer Abstand und/oder eine vorbestimmbare Lage des Bearbeitungselements zur ebenen Oberfläche eingestellt werden.

Das Fahrzeug verfügt vorzugsweise über mindestens einen Sensor, welcher die Position und/oder den Abstand des Fahrzeugs zu einer Kante der ebenen Oberfläche erfasst.

Der Sensor kann dabei ein handelsüblicher Abstandssensor sein, wie beispielsweise ein Ultraschallsensor oder dergleichen. Ferner kann das Fahrzeug auch einen Laserabtastsensor aufweisen, mit dem die ebene Oberfläche abgetastet werden sowie die Position des Fahrzeugs dazu bestimmt werden kann.

Das Fahrzeug verfügt vorzugsweise über Mittel, welche das autonome Abfahren einer vorbestimmten Trajektorie ermöglichen. Diese Mittel umfassen vorzugsweise mindestens eine Vorrichtung zur Positionsbestimmung, wie beispielsweise ein oder mehrere Laserscanner, einen Empfänger für ein Navigationssatellitensystem (wie GPS, differential GPS, Glonass oder auch Galileo), einen Funktransponder oder auch ein optisches Geovermssungssystem. Ferner vefügen diese Mittel bevorzugt über eine Software zum Berechnen einer optimalen Trajektorie (z.B. ein "Traffic Management System").

Dadurch kann das Fahrzeug vollständig oder zumindest teilweise autonom eingesetzt werden, das heisst, dass zum Einsatz des Fahrzeugs weitgehend auf einen Fahrer beziehungsweise einen Operateur verzichtet werden kann. Dies ermöglicht zudem die Optimierung der Arbeitseinsätze des Fahrzeugs, da durch die geeignete Auswahl einer Trajektorie, die das Fahrzeug abfährt, die pro Zeiteinheit bearbeitete Oberfläche maximiert werden kann.

Weitere Details und Ausführungsformen können aus der nachfolgenden Beschreibung von Beispielen und Figuren entnommen werden. Es zeigen:
- Fig. 1:: eine schematische Darstellung einer ersten Ausführungsform der erfindungsgemässen Vorrichtung;
- Fig. 2:: eine schematische Darstellung einer zweiten Ausführungsform der erfindungsgemässen Vorrichtung mit einer direkten Verbindung des zweiten Haltearms mit dem Bearbeitungselement;
- Fig. 3:: eine schematische Darstellung einer dritten Ausführungsform der erfindungsgemässen Vorrichtung mit einer indirekten Verbindung des zweiten Haltearms mit dem Bearbeitungselement;
- Fig. 4:: eine perspektivische Darstellung einer vierten Ausführungsform der erfindungsgemässen Vorrichtung mit einer indirekten Verbindung des zweiten Haltearms mit dem Bearbeitungselement;
- Fig. 5:: eine perspetivische Darstellung der Ausführungsform der Figur 4 mit dem Bearbeitungselement in einer im Wesentlichen senkrechten Position; und
- Fig. 6:: eine schematische Darstellung einer Ausführungsform der Vorrichtung mit einem als Winde ausgestaltetem zweiten Antriebsmittel.

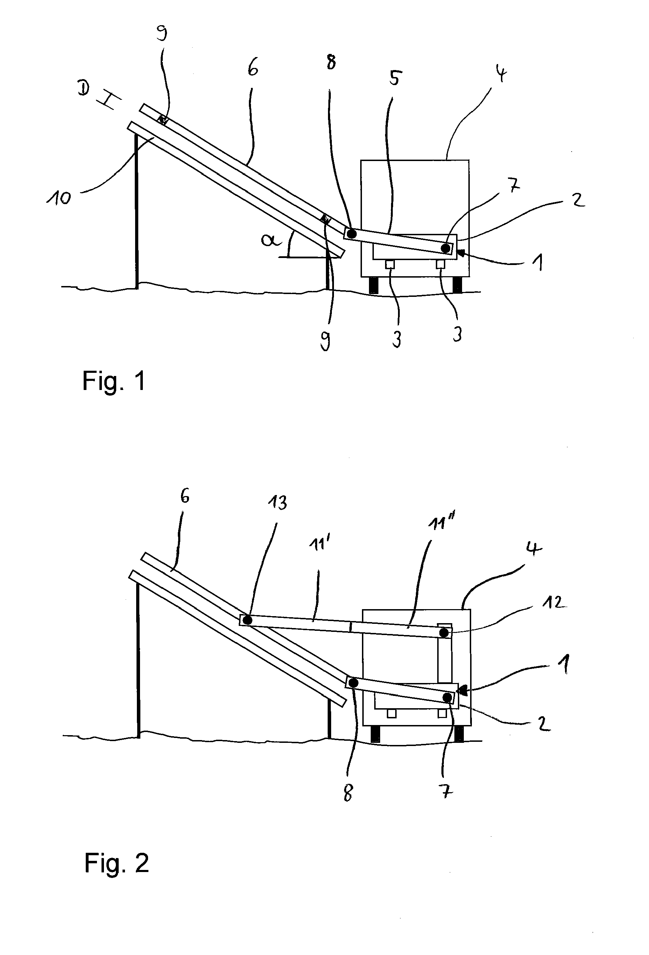

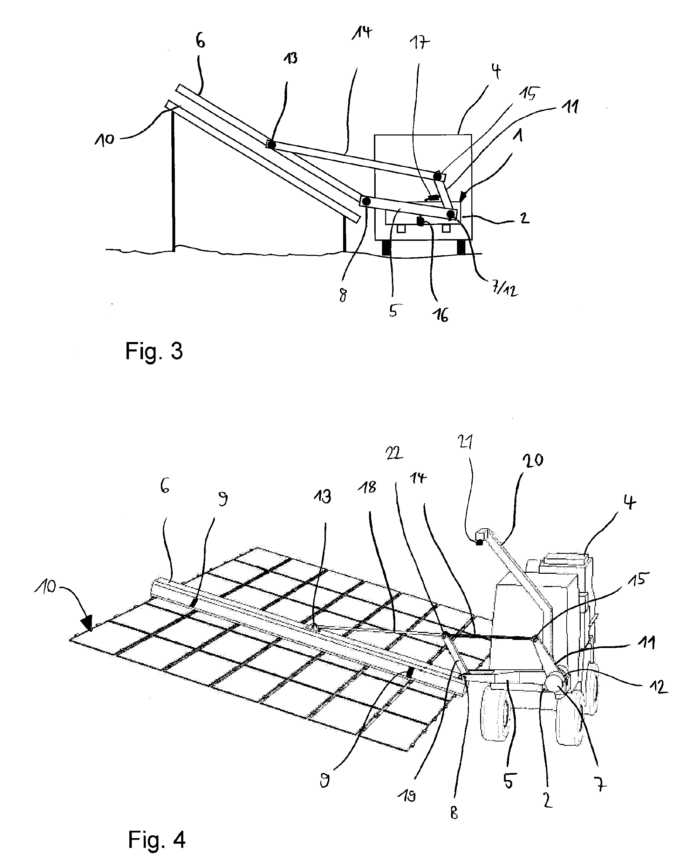

Figur 1 zeigt eine schematische Darstellung einer ersten Ausführungsform der erfindungsgemässen Vorrichtung 1, welche an einem Fahrzeug 4 befestigt ist. Die Blickrichtung der Figur 4 ist in einer Fahrtrichtung des Fahrzeugs 4, d. h. dass das Fahrzeug 4 in einer Hinter- oder Vorderansicht dargestellt ist. Die Vorrichtung 1 verfügt über eine Halterung 2, welche über entsprechende Befestigungsmittel 3 mit dem Fahrzeug 4 verbunden ist. Die Befestigungsmittel 3 können vorzugsweise in der Höhe verstellt werden, so dass vom Boden unterschiedlich hoch angeordnete ebene Oberflächen bearbeitet werden können. Ferner weist die Vorrichtung 1 einen ersten Haltearm 5 auf, welcher über ein erstes Drehgelenk 7 schwenkbar mit der Halterung 2 verbunden ist. An dem dem ersten Drehgelenk 7 entgegengesetzten Ende des ersten Haltearms 5 ist ein Bearbeitungselement 6 über ein zweites Drehgelenk 8 schwenkbar mit dem ersten Haltearm 5 verbunden. Das zweite Drehgelenk 8 ist dabei vorzugsweise derart ausgestaltet, dass das Bearbeitungselement 6 vom ersten Haltearm 5 gelöst werden kann, beispielsweise zu Wartungszwecken oder zum Auswechseln des Bearbeitungselements 6. Das Bearbeitungselement 6 verfügt ferner über Bearbeitungsmittel (nicht gezeigt), welche eine Bearbeitung einer ebenen Oberfläche, in diesem Beispiel als Solarpaneeloberfläche 10 dargestellt, ermöglichen. Bei den Bearbeitungsmitteln kann es sich beispielsweise um Reinigungsbürsten, Hoch- und/oder Niederdruckdüsen oder dergleichen handeln. Ferner sind am Bearbeitungselement 6 mehrere Abstandssensoren 9 angebracht, welche die Bestimmung den Abstandes D zwischen der Solarpaneeloberfläche 10 und dem Bearbeitungselement 6 sowie der Lage des Bearbeitungselements 6 relativ zur Solarpaneeloberfläche 10 ermöglichen.

Durch Verschwenkung des ersten Haltearms 5 relativ zur Halterung 2 bzw. des Bearbeitungselements 6 relativ zum ersten Haltearm 5 kann der Abstand D zwischen und/oder dessen Lage relativ zu der Solarpaneeloberfläche und der Unterseite des Bearbeitungselements 6 eingestellt werden. Ferner lässt sich der Anstellwinkel des Bearbeitungselements relativ zur Halterung 2 dem Anstellwinkel α der Solarpaneeloberfläche 10 anpassen. Daher kann mittels der gezeigten Vorrichtung 1 ein Reinigungsarm 6 an verschiedene Abstände D zwischen dem Bearbeitungselement 6 und einer ebenen Oberfläche, wie der im Beispiel gezeigten Solarpaneeloberfläche 10, angepasst werden. Zudem lässt sich der Anstellwinkel dem jeweiligen Anstellwinkel α der ebenen Oberfläche anpassen. Ferner ist es möglich, den Abstand D zwischen dem Bearbeitungselement 6 und der Solarpaneeloberfläche 10 und/oder die Lage des Bearbeitungselements 6 relativ zur Solarpaneeloberfläche 10 während der gesamten Bearbeitung der Solarpaneeloberfläche 10 konstant zu halten, da etwaige Kippbewegungen des Fahrzeugs 4, welche sich auf das Bearbeitungselement 6 übertragen würden, mittels entsprechender Verschwenkung des ersten Haltearms 5 relativ zur Halterung 2 bzw. durch Verschwenkung des Bearbeitungselements 6 relativ zum ersten Haltearm 5 ausgeglichen werden können. Die Vorrichtung 1 verfügt über einen Mikrocomputer oder dergleichen, welcher anhand der Messdaten der Abstandssensoren 9 sowie weiterer allfällig angebrachter Sensoren, wie beispielsweise einem Inertialsensor, entsprechende Schwenkbewegungen errechnet, um den Abstand D auf einem vorbestimmten Wert sowie die Lage des Bearbeitungselements 6 relativ zur Solarpaneeloberfläche 10 konstant zu halten. Ferner kann das Steuerungsmittel auch über Mittel verfügen, welche es ermöglichen, je nach Anwendung einen spezifischen Abstandswert vorzugeben, beispielsweise über eine Prozesssteuerungssoftware.

Die Verschwenkung am ersten Drehgelenk 7 bzw. am zweiten Drehgelenk 8 erfolgt über entsprechende Antriebsmittel, welche bei der gezeigten Ausführungsform bevorzugt als Elektro- und/oder Hydraulikservomotoren ausgestaltet sind. Die Motoren wirken direkt auf das entsprechende Drehgelenk 7, 8 ein.

Das Fahrzeug 4 verfügt über entsprechende Antriebsmittel, um eine Vorwärtsbewegung zu ermöglichen, beispielsweise über einen Servoantrieb mit autonomer Positionsregelung. Ferner wird die zum Betrieb der Bearbeitungsmittel des Bearbeitungselements 6 sowie zum Verschwenken um die Drehgelenke 7, 8 notwendige elektrische Energie durch den Fahrzeugantrieb oder einen auf dem Fahrzeug 4 befindlichen Generator erzeugt. Die zum Betrieb des Bearbeitungselements 6 notwendigen Fluide, wie beispielsweise eine Reinigungsflüssigkeit oder eine Beschichtungsflüssigkeit, sind vorteilhafterweise in einem entsprechenden Vorratsbehälter auf dem Fahrzeug 4 gelagert, wobei diese Fluide über entsprechende Verbindungen, wie beispielsweise flexible oder kinematisch bewegliche Röhren zum Bearbeitungselement 6 gelangen.

In Figur 2 ist ein weiteres Ausführungsbeispiel einer erfindungsgemässen Vorrichtung 1 dargestellt. Bei diesem Ausführungsbeispiel besteht das zweite Antriebsmittel, welches das Verschwenken des Bearbeitungselements 6 relativ zum ersten Haltearm 5 über das (hier passive) zweite Drehgelenk 8 ermöglicht, aus einem zweiten Haltearm 11, welcher in der Länge verstellbar ist. Dazu ist der zweite Haltearm 11 in zwei zueinander teleskopisch verschiebbare Teilstücke 11' und 11" geteilt. Der zweite Haltearm 11 ist dabei über ein drittes Drehgelenk 12 schwenkbar mit der Halterung 2 verbunden. Zudem ist der zweite Haltearm 11 über ein viertes Drehgelenk 13 schwenk- und bevorzugt lösbar mit dem Bearbeitungselement 6 verbunden. Das vierte Drehgelenk 13 befindet sich in der Hälfte der Länge des Bearbeitungselements 6 und ist damit vom zweiten Drehgelenk 8 beabstandet.

Ein weiteres Ausführungsbeispiel einer erfindungsgemässen Vorrichtung 1 wird in Figur 3 gezeigt. Bei diesem Ausführungsbeispiel ist der zweite Haltearm 11 über eine Strebe 14 indirekt mit dem Bearbeitungselement 6 verbunden. Die Strebe 14 ist über ein Drehgelenk 15 mit dem zweiten Haltearm 11 verbunden. Zudem ist die Strebe 14 über das vierte Drehgelenk 13 schwenk- und bevorzugt lösbar mit dem Schwenkarm 6 verbunden.

Ferner umfasst die Vorrichtung 1 bei diesem Ausführungsbeispiel zwei Kraftspeicher 16, 17. Ein erster Kraftspeicher 16 ist derart angeordnet, dass zwischen der Halterung 2 und dem ersten Haltearm 5 entgegen der Wirkrichtung der Schwerkraft eine Kraft ausgeübt wird, welche in etwa der Gewichtskraft des Bearbeitungselements 6 und des ersten Haltearms 5 entspricht. Der zweite Kraftspeicher 17 ist derart ausgestaltet, dass eine Kraft, welche im Wesentlichen der Gewichtskraft des Bearbeitungselements 6 und des zweiten Haltearms 11 entspricht, in einer Richtung, welche im rechten Winkel zur Wirkrichtung der Schwerkraft zeigt, auf den zweiten Haltearm 11 einwirkt. Durch diese beiden Kraftspeicher 16, 17 kann die Gewichtskraft des Bearbeitungselements 6 sowie des ersten Haltearms 5 beziehungsweise des zweiten Haltearms 11 beim Verschwenken über die beiden Drehgelenke 7 und 8 kompensiert werden. Dadurch wird eine insgesamt höhere Dynamik der Vorrichtung 1 erreicht.

Ein weiteres Ausführungsbeispiel ist in der Figur 4 gezeigt. Bei diesem Ausführungsbeispiel umfasst das zweite Antriebsmittel eine erste Strebe 14 sowie eine gelenkig mit dieser verbundenen zweiten Strebe 18. Die erste Strebe 14 erstreckt sich vom zweiten Haltearm 11 in Richtung des Bearbeitungselements 6, wobei diese über ein Drehgelenk 15 mit dem ersten Haltearm 11 schwenkbar verbunden ist. Zwischen der ersten Strebe 14 und dem Bearbeitungselement 6 ist eine zweite Strebe 18 angeordnet. Zusätzlich ist bei dieser Vorrichtung 1 ein Zwischenarm 19 vorhanden, welcher sich zwischen dem zweiten Drehgelenk 8 und dem (hier passiven) Drehgelenk 22 erstreckt. Das Bearbeitungselement 6, der Zwischenarm 19 sowie die zweite Strebe 18 bilden dabei ein starres Fachwerk.

Der erste Haltearm 5, der zweite Haltearm 11, die erste Strebe 14 sowie der Zwischenarm 19 sind dabei derart zueinander angeordnet, dass diese ein Parallelogramm bilden. Zudem ist die erste Strebe 14 als flexibles Seil oder als flexibler Riemen ausgebildet. Dies hat den Vorteil, dass beim Zurückziehen des Bearbeitungselements 6 in eine im Wesentlichen vertikale Position relativ zum Fahrzeug 4 der zweite Haltearm 11 in Richtung des ersten Haltearms 6 zurückbewegt werden kann, was eine Entlastung dieses zweiten Haltearms 11 in Bezug auf durch die Bewegung des Fahrzeugs 4 hervorgerufenen auf das Bearbeitungselement 6 einwirkenden Kräfte bedeutet. Dadurch lässt sich die Breite der Vorrichtung 1 etwas reduzieren, was sich vorteilhaft auf die Handhabbarkeit des Fahrzeugs 4 auswirkt.

Damit das Bearbeitungselement 6 in der im Wesentlichen senkrechten Stellung relativ zum Fahrzeug 4 gehalten werden kann, ist die Vorrichtung 1 mit einem Haltearm 20 ausgerüstet. Der Haltearm 20 verfügt dabei über Mittel, welche es ermöglichen, das Bearbeitungselement 6 bevorzugt lösbar mit dem Haltearm 20 zu verbinden. Durch das Verbinden des Bearbeitungselements 6 am Haltearm 20 kann die Vorrichtung 1 vollständig von während der Bewegung des Fahrzeugs 4 auftretenden Kräfte am Bearbeitungselement 6 entlastet werden.

Zusätzlich verfügt der Haltearm 20 über einen Sensor 21, insbesondere über einen Laserscanner, welcher es ermöglicht, die Position des Fahrzeugs 4 relativ zur Solarpaneeloberfläche 10 zu bestimmen. Diese Positionsinformation kann dazu verwendet werden, eine autonome Bewegung des Fahrzeugs 4 zu ermöglichen. Ferner kann das Fahrzeug 4 auch über weitere Sensoren verfügen, welche zur selbstständigen Steuerung des Fahrzeugs 4 beitragen können.

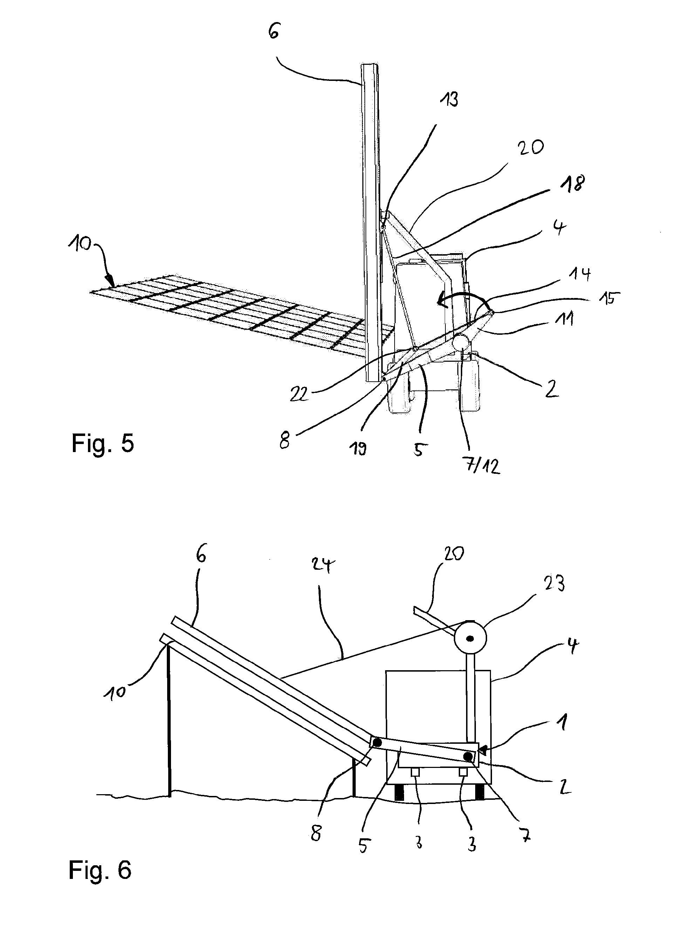

Figur 5 zeigt die in Figur 4 gezeigte Ausführungsform der Vorrichtung 1, bei der das Bearbeitungselement 6 in einer im Wesentlichen senkrechten Position mit dem Haltemast 20 verbunden ist. Der erste Haltearm 5, der zweite Haltearm 11, die erste Strebe 14 sowie der Zwischenarm 19 stehen dabei immer noch in der Form eines Parallelogramms zueinander. Nachdem das Bearbeitungselement 6 mit dem Haltemast 20 verbunden ist, kann der zweite Haltearm 11 in Richtung des Bearbeitungselements 6 (Bewegung als Pfeil markiert) bewegt werden. Dies entlastet die erste Strebe 14 und verringert auch die Breite des Fahrzeugs 4, da der zweite Haltearm 11 nicht mehr über die Fahrzeugseite herausragt. Das Verbinden des Bearbeitungselements 6 mit dem Haltemast 20 entlastet zudem die gesamte Vorrichtung 1, d. h. insbesondere den ersten Haltearm 5 sowie den zweiten Haltearm 11 und die Streben 14, 18 von Kräften, welche durch die Bewegung des Fahrzeugs 4 auf das Bearbeitungselement 6 hervorgerufen werden können.

Eine weitere Ausführungsform der Vorrichtung 1 ist in Figur 6 gezeigt. Bei dieser Ausführungsform ist das zweite Antriebsmittel, mit dem das Bearbeitungselement 6 relativ zum ersten Haltearm 5 über das zweite Drehgelenk 8 verschwenkt werden kann, als Winde 23 ausgestaltet. Die Winde 23 ist über ein flexibles Seil 24 mit dem Bearbeitungselement 6 verbunden. Durch das Auf- bzw. Abrollen des Seils 24 auf der Winde 23 kann das Bearbeitungselement 6 relativ zum ersten Haltearm 5 verschwenkt werden. Das Seil 24 könnte alternativ auch als Band oder als Kette ausgestaltet sein. Die Winde 23 ist dabei am Haltemast 20 angebracht. Das erste Antriebsmittel, mit Hilfe dessen der erste Haltearm 5 relativ zur Halterung 2 verschwenkt werden, ist bevorzugt als Elektro- oder Servomotor ausgestaltet.

## Patentansprüche

1. Vorrichtung (1) zur Bearbeitung ebener Oberflächen, insbesondere Oberflächen von Solarpaneelen (10), umfassend:
- eine Halterung (2) mit Mitteln (3) zur Befestigung der Halterung an ein Fahrzeug (4),
- einen ersten Haltearm (5), der an einem Ende schwenkbar mit der Halterung (2) verbunden ist, und
- einem Bearbeitungselement (6), welcher Mittel zur Bearbeitung einer ebenen Oberfläche aufweist und an einem Ende schwenk- und bevorzugt lösbar mit dem ersten Haltearm (5) verbunden ist,
**dadurch gekennzeichnet, dass** der erste Haltearm (5) mittels eines ersten Drehgelenks (7) relativ zur Halterung (2) und das Bearbeitungselement (6) mittels eines zweiten Drehgelenks (8) relativ zum ersten Haltearm (5) schwenkbar sind, wobei durch die Verschwenkung des Bearbeitungselements (6) relativ zum ersten Haltearm (5) mittels eines ersten Antriebsmittels und/oder durch Verschwenkung des ersten Haltearms (5) relativ zur Halterung (2) mittels eines zweiten Antriebsmittels ein vorbestimmbarer Abstand (D) des Bearbeitungselements (6) zur ebenen Oberfläche und/oder eine vorbestimmbare Lage des Bearbeitungselements (6) relativ zur ebenen Oberfläche eingestellt werden kann.

2. Vorrichtung (1) gemäss Anspruch 1, **dadurch gekennzeichnet, dass** die Achsen des ersten Drehgelenks (7) und des zweiten Drehgelenks (8) derart angeordnet und die Befestigungsmittel (3) derart ausgestaltet sind, dass das Bearbeitungselement (6) und/oder der erste Haltearm (5) bei bestimmungsgemässem Gebrauch der Vorrichtung (1) nur in einer Ebene, welche senkrecht zur Bewegungsrichtung des Fahrzeugs (4) liegt, verschwenkbar sind.

3. Vorrichtung (1) gemäss einem der Ansprüche 1 oder 2, **dadurch gekennzeichnet, dass** zwischen dem ersten Haltearm (5) und der Halterung (2) ein Kraftspeicher (17) angeordnet ist, welcher entgegen der Wirkrichtung der Schwerkraft auf den ersten Haltearm (5) eine Kraft ausübt, die der Gewichtskraft des Bearbeitungselements (6) und des ersten Haltearms (5) entspricht.

4. Vorrichtung (1) gemäss einem der Ansprüche 1 bis 3, **dadurch gekennzeichnet, dass** die Vorrichtung (1) mindestens einen Sensor (9) zur Messung des Abstandes (D) einer Fläche des Bearbeitungselements (6) zur ebenen Oberfläche aufweist.

5. Vorrichtung (1) gemäss einem der Ansprüche 1 bis 4, **dadurch gekennzeichnet, dass** die Vorrichtung (1) über mindestens einen Inertialsensor verfügt, mit dem die auf das Bearbeitungselement (6) und/oder der Halterung (2) einwirkenden Beschleunigung gemessen werden können.

6. Vorrichtung (1) gemäss einem der Ansprüche 4 oder 5, **dadurch gekennzeichnet, dass** die Vorrichtung (1) über Steuerungsmittel verfügt, welche aufgrund des gemessenen Abstandes (D) und/oder der gemessenen Beschleunigung durch koordinierte Ansteuerung des ersten Antriebsmittels und/oder des zweiten Antriebsmittels den Abstand (D) des Bearbeitungselements (6) zur ebenen Oberfläche auf einen vorbestimmten oder vorbestimmbaren Wert einstellen oder nachführen.

7. Vorrichtung (1) gemäss einem der Ansprüche 1 bis 6, **dadurch gekennzeichnet, dass** das erste Antriebsmittel einen zweiten Haltearm (11) umfasst, der über ein drittes Drehgelenk (12) schwenkbar mit der Halterung (2) verbunden ist und direkt oder indirekt über ein viertes Drehgelenk (13) schwenk- und bevorzugt lösbar mit dem Bearbeitungselement (6) verbunden ist.

8. Vorrichtung (1) gemäss Anspruch 7, **dadurch gekennzeichnet, dass** die Achse des dritten Drehgelenks (12) und die Achse des ersten Drehgelenks (7) co-axial angeordnet sind.

9. Vorrichtung (1) gemäss einem der Ansprüche 7 bis 8, **dadurch gekennzeichnet, dass** zwischen dem zweiten Haltearm (11) und der Halterung (2) ein Kraftspeicher (18) wirkt, welcher in einer Richtung, welche rechtwinklig zur Wirkrichtung der Schwerkraft steht, auf den zweiten Haltearm (11) eine Kraft ausübt, die der Gewichtskraft des Bearbeitungselements (6) entspricht.

10. Vorrichtung (1) gemäss einem der Ansprüche 7 bis 9, **dadurch gekennzeichnet, dass** der zweite Halterarm (11) indirekt über zwei Streben (14,18) schwenk- und bevorzugt lösbar mit dem Bearbeitungselement (6) verbunden ist und die Vorrichtung (1) zusätzlich einen Zwischenarm (19) aufweist, welcher über das zweite Drehgelenk (8) am ersten Haltearm (5) schwenkbar angeordnet ist, wobei eine erste Strebe (14) zwischen dem zweiten Haltearm (11) und dem Zwischenarm (19) angebracht ist und der erste Haltearm (5), die erste Strebe (14), der zweite Haltearm (11) sowie der Zwischenarm (19) derart ausgestaltet sind, dass diese ein Parallelogramm bilden, und wobei eine zweite Strebe (18) zwischen dem Bearbeitungselement (6) und dem Zwischenarm (19) schwenk- und bevorzugt lösbar angeordnet ist.

11. Vorrichtung (1) gemäss Anspruch 10, **dadurch gekennzeichnet, dass** das Bearbeitungselement (6), die zweite Strebe (18) sowie der Zwischenarm (19) derart ausgestaltet sind, dass diese ein starres Fachwerk bilden.

12. Vorrichtung (1) gemäss Anspruch 10 oder 11, **dadurch gekennzeichnet, dass** die erste Strebe (14) aus mindestens einem flexiblen Seil besteht.

13. Vorrichtung (1) gemäss einem der Ansprüche 1 bis 12, **dadurch gekennzeichnet, dass** die Halterung (2) einen zusätzlichen Haltemast (20) aufweist, der derart ausgestaltet ist, dass das Bearbeitungselement (6) in einer im Wesentlichen vertikalen Position relativ zur Bewegungsrichtung des Fahrzeugs (4) daran befestigbar ist.

14. Vorrichtung (1) gemäss einem der Ansprüche 1 bis 13, **dadurch gekennzeichnet, dass** das Bearbeitungselement (6) derart ausgestaltet ist, dass die Vorrichtung (1) zur Trockenreinigung, zur Nassreinigung, zum Auftragen eines Fluids und/oder zum Messen einer Eigenschaft der ebenen Oberfläche geeignet ist.

15. Fahrzeug (4) zur Bearbeitung ebener Oberflächen, insbesondere Oberflächen von Solarpaneelen (10), mit mindestens einer Vorrichtung (1) gemäss einem der Ansprüche 1 bis 14.
